# EUROPEAN PATENT APPLICATION

(11) **EP 3 266 810 A1**
(43) Date of publication of application: **10.01.2018**
(21) Application number: 16177868.3
(22) Date of filing: 05.07.2016
(51) Int. Cl.: C08H 7/00, C08L 1/00, C09J 101/00, C08L 97/00, C09J 197/00

(54) **LIGNIN BASED COMPOSITE MATERIAL AND METHOD FOR ITS PRODUCTION**

(71) Applicant: Max-Planck-Gesellschaft zur Förderung der Wissenschaften e.V., 80539 München (DE)
(72) Inventor: MOLINARI, Valerio, 14473 Potsdam (DE); ANTONIETTI, Markus, 14558 Nuthetal (DE)
(74) Representative: Kröncke, Rolf

(57) **Abstract**

In a first aspect, the present invention relates to a lignin based composite material containing degraded lignin obtained by reductive hydrogenation. The lignin based composite material is characterized in containing degraded lignin having a substantially reduced amount of β-O-4 linkages. Further, the present invention relates to a method for producing said lignin based composite material according to the present invention comprising reductive hydrogenation of lignin in order to provide degraded lignin and mixing the same with protein and filler. Further, the present invention relates to a method for producing an article composed of the lignin based composite material according to the present invention obtainable by drying the material at a suitable temperature. Finally, the present invention relates to a molded article or semi-finished product composed of the lignin based composite material according to the present invention and the use of the lignin based composite material for various purposes including wood based material composed of the lignin based composite material according to the present invention.

## Description

In a first aspect, the present invention relates to a lignin based composite material containing degraded lignin obtained by reductive hydrogenation. The lignin based composite material is characterized in containing degraded lignin having a substantially reduced amount of β-O-4 linkages. Further, the present invention relates to a method for producing said lignin based composite material according to the present invention comprising reductive hydrogenation of lignin in order to provide degraded lignin and mixing the same with protein and filler. Further, the present invention relates to a method for producing an article composed of the lignin based composite material according to the present invention obtainable by drying the material at a suitable temperature. Finally, the present invention relates to a molded article or semi-finished product composed of the lignin based composite material according to the present invention and the use of the lignin based composite material for various purposes including wood based material composed of the lignin based composite material according to the present invention.

### Prior art

The average consumer is more attracted to wood based materials rather than plastic objects, but articles made out of good quality would have got too expensive, and, therefore, not everyone is economically able to purchase them. This economic factor has led to the spread of cheap wood materials for example pressed wood, fiber wood, particle boards or chip boards as well as OSB. These materials have the advantage of being available to everyone but with the drawback of poor quality. Typically, these cheap materials are obtained from pine wood or coniferous wood. These cheap objects are often fabricated by reacting lignocellulosic materials with adhesives including formaldehyde-based resins, thus, resulting in bad feedbacks by the consumers' community, which prefer chemical free wood based materials. In particular, a drawback of the coniferous wood based materials is a high emission of very volatile and volatile organic compounds. In particular, aldehydes including formaldehydes either derived from the adhesive or the lignocellulosic material itself are unwanted, in particular, in long use of the wood based materials accordingly.

The attempts to solve the problem have tried to replace hazardous chemicals with less toxic cross linkers, like amino compounds, or isocyanate based compounds. Alternatively, natural adhesives and binders such as protein and lignins are used. In addition, various attempts have been made to reduce the emission of hazardous components including volatile and very volatile compounds by adding particular additives to the lignocellulosic materials during production.

One of the natural adhesives which have been used as substitutes for reducing hazardous chemicals is lignin, which can be directly extracted from biomass or, even more interestingly, sourced from the waste products of paper industries.

Lignin is a class of complex organic polymers that form important structured materials and the support tissue of vascular plants and some algae. From the chemical point of view, lignins are crossed linked phenol polymers.

Basically, lignin is a crossed linked racemic macromolecule with molecular masses in excess of 10.000. Typically, it is relatively hydrophobic and aromatic in nature. The degree of polymerization depends on the source of plants. Different types of lignin are described in the art with different polymerization grade and different types of composition. Normally, there are three monolignol monomers being methoxylated to various degrees. That is, the basic structure of lignin is composed of p-coumaryl alcohol, coniferyl alcohol and sinapyl alcohol. Derivatives of these lignols, namely, phenylpropanoids p-hydroxyphenyl, guaiacyl and syringyl are present in the lignin in varying amounts depending on the source.

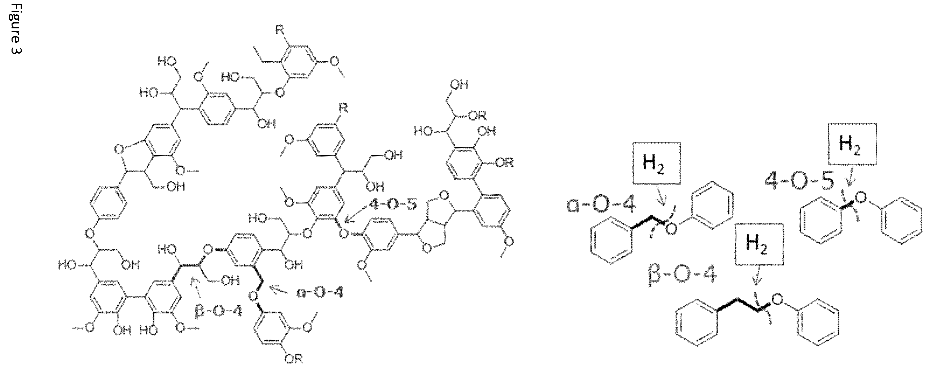

Actually, different types of ether linkages are present in the lignin, namely α-O-4, β-0-4 and 4-0-5 as the three most common. Figure 3 shows a lignin with the different types of linkages, highlighting the most common ether bonds.

However, lignin solubility is intrinsically very low, its poor dispersion in the material causes the formation of black lignin aggregates; the presence of these rigid spots causes an easier rupture of the material, lowering the quality of its mechanical properties. This drawback is drastically increased in scaled-up processes, in which the efficient mixing of solids in big quantities is not trivial. US 2013/0202905 A1 faces this problem suggesting an extraction of lignin from biomass using an amino compound, to form amino-lignin species of increased solubility. The amino-lignin is formed during the lignin extraction from the biomass, preventing the possibility to use lignin extracted in other processes, i.e. in the abundant kraft lignin from paper industry. Other prior art techniques include the addition of chemicals, which require to be washed away with purification processes or may remain as impurities in the end product. For example, amino molecules for the formation of an amino-lignin conjugation is described as well as organic or inorganic diluents, mineral salts, bases and acids to alter the pH and to favour the solubilisation of the components or other organic/inorganic species. That is, chemical or enzymatic treatment, also known as pulping, of the matrix is usually required to separate lignin from associate carbohydrates. Various types of chemically modified lignins exist, e.g. kraft lignin, lignosulphonate, soda anthraquinone, and organosolv ethanol lignins. Of these, kraft lignin and lignosulphonates are the most commercialized lignins extracted from lignocellulosic materials by the pulp and paper industry. Since lignin is considered as a biomass derived product being non-toxic and easily available, lignin is regarded as a suitable source for a biological adhesive. As noted before, lignin is available as a waste product from paper industry. That is, kraft lignin is available in large amounts representing a cheap and attractive starting material for lignin based composite materials.

A further strategy to increase the solubility of lignin without the addition of chemicals in the material is to depolymerize or degrade it in smaller fragments. The utilization of depolymerized lignin maintains the possibility of using lignin from a re-extraction process, such as kraft lignin, organosolv lignin or any biomass. Furthermore, the depolymerized lignin contains more hydroxylgroups - generated by the cleavage of C-O-C bonds - than e.g. pristine lignin, which may be employed as natural cross-linkers in the final material, reducing or even neglecting the utilization of cross-linking agents.

An overview of pretreatment of lignin in particular with respect to the molecular weight of lignin is provided in Tolbert, A. et al, Biofpr, 2014, DOI 10.102/bbb.1500.. Lignin depolymerization may be effected by oxidative processes or reductive processes.

For example, reductive lignocellulose fractionation into soluble lignin derived phenolic monomers and dimers and possessive carbohydrate pulps is described by Van den Bosch, S., et al, Energy environ. Sci., 2015, 8, 1748-1763. Of note, the fractionation is to monomers and dimers only.

That is, various approaches have been conducted to arrive at composites containing adhesive material from biomass, however, the adhesives used so far are chemically derived adhesives, thus, emitting e.g. hazardous chemicals into the environment or the biomaterial-based adhesive, e.g. on the basis of lignin or other biomass derived materials, do not have the desired mechanical properties including impact strength, tensile stress at break and tensile strength at break but also hardness etc. Hence, it is an object of the present invention to provide new composites having good mechanical properties, in particular, composites representing biodegradable materials e.g. from renewable resources. These composite materials are useful for various purposes including production of molded parts, half-finished products, sheets, films or profiles by e.g. injection molding, extrusion, calendaring, blow molding etc.

### Brief description of the present invention

In a first aspect, the present invention relates to a lignin based composite material containing
a) degraded lignin obtained by reductive hydrogenation,
b) protein,
c) filler,
d) optional, a cross-linker,
wherein the degraded lignin obtained by reductive hydrogenation has a substantially reduced amount of β-O-4 linkages compared to non-treated lignin or lignin treated by other methods for degradation, in particular, wherein less than 10% of the β-O-4 linkages like less than 5% are present.

That is, the present inventors recognized that using degraded lignin obtained by reductive hydrogenation in combination with protein and filler material allows to provide lignin based composite material particularly useful for molded articles and semi-finished articles as well as adhesives etc.

In another aspect, the present invention relates to a method for producing an article composed of the lignin based composite material or a lignin based composite material according to the present invention comprising the steps of
- providing degraded lignin whereby said lignin is obtained by reductive hydrogenation;
- mixing the degraded lignin with a protein, like plant or animal protein and a filler in the presence or absence of a solvent, like water obtaining the lignin based composite material; and
- optionally drying the obtained lignin based composite material to provide the article.

Moreover, the present invention relates to the molded article composed of the lignin based composite material according to the present invention or being obtainable by processes according to the present invention.

Finally, the present invention relates to the use of the lignin based composite material according to the present invention for the preparation of adhesives, membranes, water retention materials, fire retardant materials, fire extinguisher materials, biomass derived materials, medium density fiber boards, particle boards, foams, insulators and packaging materials. The present invention relates further to wood based material or wood like material composed of the lignin based composite material according to the present invention or being obtainable by a process according to the present invention. The wood based material is in particular fiber boards and chip boards.

### Brief description of the drawings

Figure 1 a shows a 2D NMR of kraft lignin before degradation of the same. Figure 1b shows a 2D NMR of kraft lignin prepared via alkaline extraction. Both demonstrate the presence of the β-aril ether (β-O-4) linkage. In contrast, as shown in Figure 1c, the 2D NMR of kraft lignin after degradation reaction with reductive hydrogenation, shows the absence of the β-aril ether bond.
Figure 2 shows a compression test of the molded article obtainable according to the present invention compared with normal lignin
Figure 3 shows a lignin highlighting the different types of linkage present including the β-O-4 linkage

### Detailed description of the present invention

In a first aspect, the present invention relates to a lignin based composite material containing
a) degraded lignin obtained by reductive hydrogenation,
b) protein,
c) filler,
d) optional, a cross-linker,
wherein the degraded lignin obtained by reductive hydrogenation has a substantially reduced amount of β-O-4 linkages compared to non-treated lignin or lignin treated by other methods for degradation, in particular, wherein less than 10% of the β-O-4 linkages like less than 5% are present.

That is, the material according to the present invention makes use of degraded lignin obtained by reductive hydrogenation in combination with a protein and filler for preparation of lignin based composite material. Said lignin based composite material is characterized in having a reduced number of β-O-4 linkages present in the lignin, namely, compared to the known methods including organosolv, alkaline extraction and kraft lignin, the degradation method degrading lignin into oligomers is effective in cleaving said β-O-4 linkages, thus, the β-O-4 linkages are preferably less than 50% of the β-O-4 linkages compared to non-treated lignin or lignin treated by other methods for degradation, like less than 30%, e.g. less than 20%, e.g. less than 10%, like less than 5% of the β-O-4 linkages accordingly.

The lignin based composite material as used herein refers to a composite material containing degraded lignin. Thus, the term lignin based refers to the fact that the degraded lignin is derived from lignin accordingly.

In addition, the term "reductive hydrogenation" refers to a process in which the lignin is reacted with a hydrogen source, like under hydrogen atmosphere in presence of a catalyst. The ether linkages in lignin are broken by the addition of hydrogen and, as a result, the weight average molar mass of lignin decreases.

The term "weight average molar mass" refers to the average molecular weight (Mw) calculated after size exclusion chromatography using polystyrene as standard for the calibration.

The present inventors aim to provide a composite material which represents a material easy formable prior hardening but provides a product after hardening which demonstrates good mechanical properties including module of elasticity, hardness, workability, toughness and tunable porosity and density. That is, while it can be easily shaped as a starting material, after hardening the lignin based composite material is a light hard material which can be fastened with screws and has good shock absorbance capacity. In addition, it is well compatible with additives including graphitic carbon or others and the density can be easily controlled. The degradation of the lignin results in higher strength of the formed material compared with the same product formed from normal lignin. In addition, the lignin based composite material can be obtained easily without hardening at high temperatures, thus, no deterioration occurs. This is in contrast to the known material having lignin agglomerates resulting in black spots due to pyrolysis of the lignin at high temperatures.

It is preferred that the protein is a vegetable or animal protein or a mixture of the same. In an embodiment, the plant or animal proteins or mixtures thereof are selected from gluten, whey protein, casein, gelatin, albumin, soil, collagen, blood meal or combinations thereof.

The amount of the degraded lignin in the lignin based composite material is in an embodiment in the range of 1 to 50 weight-% based on the final product while the amount of the protein may be in the field of 1 to 75 weight-% based on the final product.

The filler may be present in a range of 0.1 to 75 weight-% based on the final product. In an embodiment, the filler is selected from polymers. For example, the filler is a natural polymer including natural fibers. For example, the fillers are polysaccharides, polyamides, cellulose, lignocellulose or hemicellulose, starch, rubber, amber, chitosan, chitin, cotton, fiberglass or combinations thereof.

That is, in an embodiment of the present invention, the lignin based composite material according to the present invention is a bio composite containing basically natural compounds. In particular, the protein, filler and cross linker are natural compounds.

The lignin of the present invention may be obtained from kraft lignin. Kraft lignin is a waste material obtainable from paper and pulp industry. Thus, it is easily available and represents a cheap starting material.

The degraded lignin, which may be a lignin obtained by reductive hydrogenation of kraft lignin, may be obtained from any plant.

The reductive hydrogenation may be conducted using a Ni based catalyst, like a TiN-Ni based catalyst.

In an embodiment of the present invention, the degraded lignin has a (weight) average molar mass in the range of from 600 g/mol to 2000 g/mol like 800 g/mol to 1600 g/mol in particular, 1000 g/mol to 1400 g/mol. That is, the present inventors recognized that degradation of the lignin has beneficial effects on the composite material. However, full degradation of the lignin to its monomers or dimers may not be advantageous.

The degraded lignin represents a suitable adhesive useful in various composite materials.

Optionally, the lignin based composite material contains a cross linker. The cross linker may be selected from urea, amides, carboxylic acids, amino acids, ketosis and aldehyde compounds or combinations thereof.

In an embodiment of the present invention, the ratio of protein to lignin present in the lignin based composite material is selected from a range of from 1:1 to 5:1 and/or the ratio of filler to lignin is in the range of from 1:1 to 7:1 and/or the ratio of filler to protein is in the range of from 1:0.7 to 7:1.

That is, by routine tests, the skilled person will identify the relevant amounts of each of the components in the lignin based composite material to meet the desired properties accordingly.

In another embodiment, the lignin based composite material is composed of a protein derived from plant or animal, like gluten, the filler is a natural fiber of cellulose and the cross linker is urea.

The lignin based composite material may be formed into the desired articles, e.g. molded articles or may be the starting material for wood based material composed of the lignin based composite material according to the present invention.

In another embodiment, the present invention relates to a method for producing a lignin based composite material or an article composed of a lignin based composite material according to the present invention comprising the steps of
- providing degraded lignin whereby said lignin is obtained by reductive hydrogenation;
- mixing the degraded lignin with a protein, like plant or animal protein and a filler in the presence or absence of a solvent, like water to form a lignin based composite material; and
- optionally drying the obtained lignin based composite material to provide an article.

That is, the degraded lignin may be provided in form of a powder or with an appropriate solvent. Also the protein and the filler may be provided in solid form or present in an appropriate solvent accordingly.

The solvent may be an organic solvent or an aqueous solvent like water and, if desired, the obtained lignin based composite material may be dried. For example, the solvent is an aqueous solvent being slightly basic, e.g. in the range of pH 7.5 to pH 8.5.

In an embodiment, powdered starting materials including the degraded lignin, the filler, like cellulose fibers, and the protein, like gluten, are dissolved in water resulting in a viscous mixture. Said viscous mixture may be dried for later use or, alternatively, may be transferred in a mold of desired shape followed by heat drying to provide an article composed of the lignin based composite material accordingly. For example, the article is a molded article.

That is, the present invention provides a method for producing an article composed of the lignin based composite material according to the present invention comprising the steps of providing degraded lignin whereby said lignin is obtained by reductive hydrogenation;
mixing the degraded lignin with a protein, like plant or animal protein, and a filler in the presence or absence of a solvent, like water to form the lignin based composite material, and forming the article followed by drying the same accordingly.

In an embodiment, drying of the formed lignin based composite material is conducted as a wet mixture of said material at a temperature in the range of 70 to 120°C to form the article.

In another embodiment, the method according to the present invention for producing the lignin based composite material includes the step of i) mixing the components of degraded lignin, protein and filler, and optionally, cross linker by vigorously stirring the mixture in the presence of a solvent, like an aqueous solvent e.g. water. Alternatively, mixing can be conducted by way of extrusion. Thus, a foamed lignin based composite material is obtained which may be hardened thereafter by e.g. drying at temperatures as described above, e.g. in the range of from 70 to 120°C.

That is, the method allows to provide a foamed article obtained by extrusion or vigorously stirring the mixture accordingly. The foamed article composed of the lignin based composite material has several advantages including light density, thermal and sound insulation properties.

In another embodiment, the present invention provides a method for preparing a molded article whereby when drying the lignin based composite material a molding step of said mixture is conducted. Molding can be effected in any desired shape. That is, the obtained dry or wet mixture can be shaped and dried from the water upon terminal treatment. In an embodiment of the present invention, the method is conducted in the absence of any solvent, thus, dry components are mixed and hardened. Alternatively, one, two or all components may be present mixed in a solvent accordingly.

In another embodiment, the present invention relates to an article including a molded article composed of the lignin based composite material according to the present invention or obtainable by a process according to the present invention.

The molded article includes adhesives, membranes, water retention materials, fire retardant materials, fire extinguisher materials, biomass derived materials, wood based materials including medium density fiber boards, particle boards, foams, insulators and packaging materials.

The skilled person is well aware of suitable molded articles formed by the lignin based composite material according to the present invention. That is, the present invention relates to the use of this lignin based composite material according to the present invention for the preparation of a molded article including the molded articles mentioned above.

In addition, the present invention relates to a wood based material also referred to as wood like material composed of a lignin based composite material according to the present invention or obtained by a process according to the present invention. The wood based material may be for example a fiber board or a chip board like MDF or HDF boards.

The present invention will be illustrated further by way of examples without restricting the same thereto.

### Example 1

Preparation of degraded lignin by reductive hydrogenation in a flow or batch reactor. For flow reactions the lignin must be dissolved in a solvent as ethanol and then pumped through a bed of catalyst (i.e. Raney Nickel or TiN-Ni) in presence of hydrogen atmosphere at temperatures of 150°C or higher.

For batch reactions the lignin (10g) and the catalyst (1g) are loaded in an autoclave and mixed with the solvent (400 mL). The autoclave is purged with nitrogen, loaded with hydrogen (8 bar, room temperature) and heated up at the desired temperature (150-220°C). After reaction is completed the solid is filtered and the remaining solution is composed by depolymerised lignin dissolved in the solvent. This solution can be used as such for the preparation of the wood-like material, or it can be dried/precipitated in order to obtain the depolymerised lignin as a solid.

### Example 2 (Reference example)

Powdered lignin (20g) is mixed with cellulose fibers (60g), gluten (20g) and water. The powdered lignin is kraft lignin or organosolv lignin.. The resulting viscous mixture is then transferred in a mold of desired shape. After drying for four hours at 100°C, the final product is a hard object. Upon breakage lignin agglomerates are observed in the matrix of the material, suggesting that the lignin has formed weak spots in the object.

### Example 3

Depolymerized lignin obtained in example 1 in a liquid state (20g in 400ml) is mixed with cellulose fibers (60g) and gluten (20g). The resulting viscous mixture is then transferred in a mold of desired shape. After drying for four hours at 100°C, the final product is a hard object with enhanced mechanical properties compared to example 2 and, in addition, no lignin aggregates are visible.

### Example 4

Degraded lignin in the dry state (20g) is mixed with cellulose fibers (60g), gluten (20g) and water. The resulting viscous mixture is then transferred in a mold of desired shape. After drying for four hours at 100°C, the final product is a hard object with enhanced mechanical properties compared to the article of example 2 and no lignin aggregates are visible.

### Example 5

Degraded lignin in the dry state (20g) is mixed with whey protein (60g), gluten (20g) and water. The resulting viscous mixture is then transferred in a mold of desired shape. After drying for three hours at 100°C a soft, but stable product is obtained. Upon drying for 24 hours a rigid and hard object is recovered.

### Example 6

Degraded lignin in the dry state (20g) is mixed with cellulose fibers (60g), gluten (20g) and water. After mixing the same obtaining a wet solution, said wet solution is stirred vigorously upon addition of more water. After some minutes of agitation, a stable form is produced and transferred in a shaped mold. After drying for six hours at 100°C, the final article is obtained representing a light and porous object.

### Example 7

### Testing of different composition

Following the method described in example 2, the components as identified in table 1 are mixed with each other and the lignin based composite materials are formed.

| | Cellulose | Gluten | Lignin | Urea | H2O | cellulose/gl uten | cellulose/lignin | gluten/lignin | Cellulose% | Gluten% | Lignin% | notes |
|---|---|---|---|---|---|---|---|---|---|---|---|---|
| 1 | 50 | 30 | 10 | 10 | 300 | 1,67 | 5,00 | 3,00 | 50,00 | 30,00 | 10,00 | standard |
| 2 | 70 | 10 | 10 | 10 | 300 | 7,00 | 7,00 | 1,00 | 70,00 | 10,00 | 10,00 | Maximum cellulose % |
| 3 | 30 | 50 | 10 | 10 | 100 | 0,60 | 3,00 | 5,00 | 30,00 | 50,00 | 10,00 | - |
| 4 | 30 | 30 | 30 | 10 | 100 | 1,00 | 1,00 | 1,00 | 30,00 | 30,00 | 30,00 | - |
| 5 | 10 | 70 | 10 | 10 | 100 | 0,14 | 1,00 | 7,00 | 10,00 | 70,00 | 10,00 | Good as glue |
| 6 | 10 | 50 | 30 | 10 | 100 | 0,20 | 0,33 | 1,67 | 10,00 | 50,00 | 30,00 | Good as glue |
| 7 | 55 | 35 | 10 | 0 | 100 | 1,57 | 5,50 | 3,50 | 55,00 | 35,00 | 10,00 | - |
| 8 | 40 | 40 | 10 | 10 | 100 | 1,00 | 4,00 | 4,00 | 40,00 | 40,00 | 10,00 | - |

As demonstrated in table 1, various ratios of the different components may be used to result in suitable lignin based composite material for different purposes.

### Example 8

Testing the compression of the articles required to cut the sample into 4x4x3 cm (length, width, height) sized specimens. The testing speed was 10 mm/min and the strength vs strain was monitored and measured in a Zwick z010 universal testing machine (Zwick, Ulm Germany). The weight and the density were previously calculated in order to normalize the stiffness by the density.

### Example 9

### Analysis of the β-O-4 linkages

The degraded lignin obtained after reductive hydrogenation are collected and isolated from the solvent. 100 mg of the lignin was dissolved in deuterated solvent for the HQSC measurement. The measurement was performed either in deuterated dimethylsulfoxide DMSO or, if the lignin was acetylated prior measurement, in deuterated chloroform (CDCL₃). The content of β-O-4 can be estimated by comparing the value of their signal integration to an internal standard as dimethylformamide (DMF).

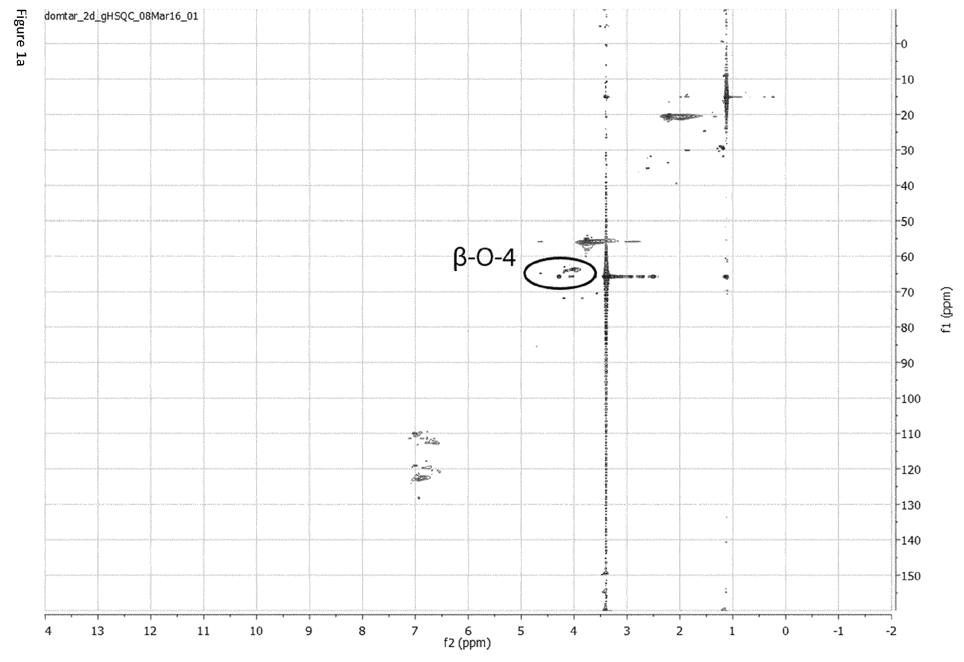

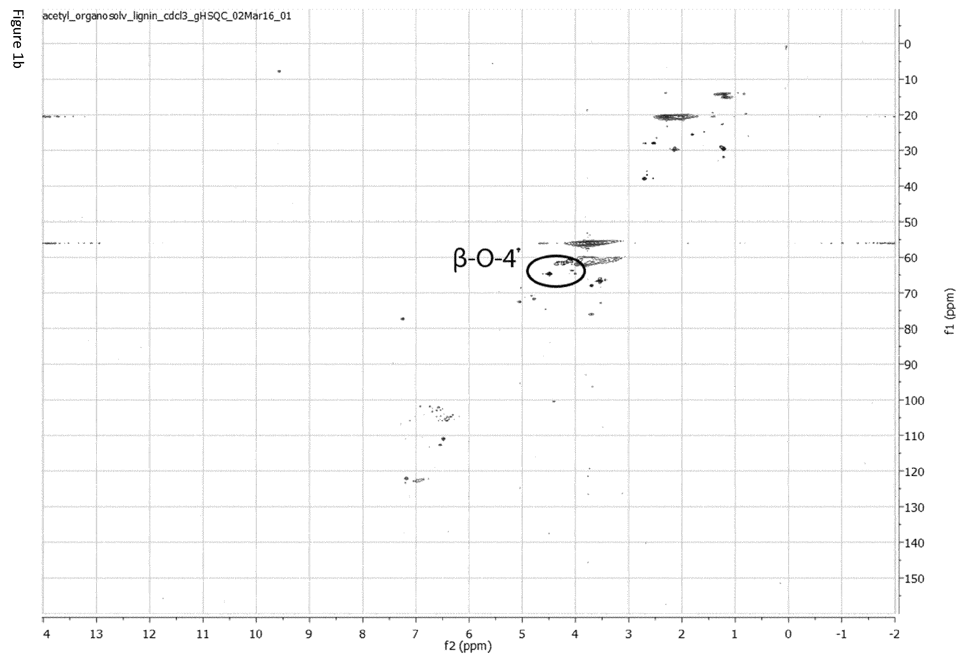

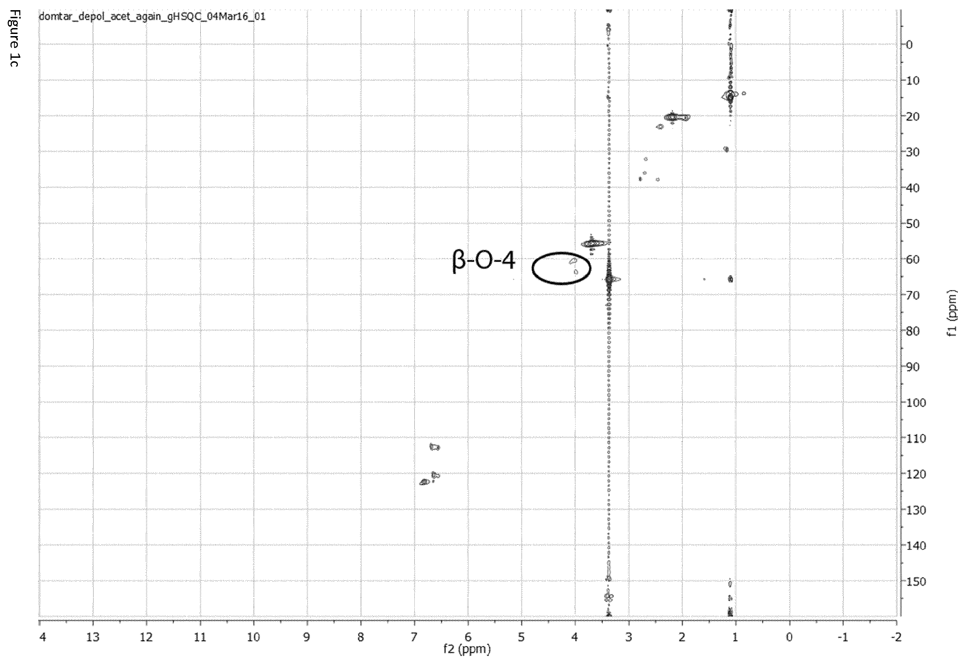

As demonstrated in figures 1a to 1c, only reductive hydrogenation results in a reduction or even absence of β-O-4 linkages in the degraded lignin.

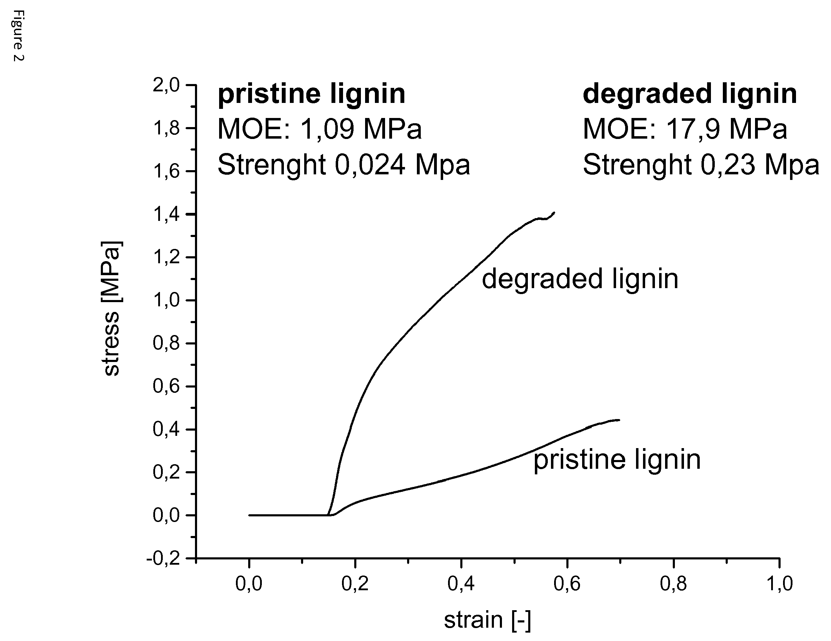

In figure 2 a compression test of a molded article obtained in example 4 compared with the article obtained in example 2. The compression test was conducted using a Zwick z010 universal testing machine on specimens of size equal to 4x4x3 cm (length, width and height); the testing speed was set at 10 mm/min and the results were normalized to the density of the material.

In figure 3, a scheme of a lignin molecule is shown. Emphasized are the different types of linkages of the basic structural components of the lignin compound. The β-0-4 linkage is cleaved by reductive hydrogenation only.

## Claims

1. A lignin based composite material containing
a) degraded lignin obtained by reductive hydrogenation,
b) protein,
c) filler,
d) optional, a cross-linker,
wherein the degraded lignin obtained by reductive hydrogenation has a substantially reduced amount of β-O-4 linkages compared to non-treated lignin or lignin treated by other methods for degradation, in particular, wherein less than 10% of the β-O-4 linkages like less than 5% are present.

2. The lignin based composite material according to claim 1 wherein the degraded lignin has a weight average molar mass (Mw) in the range of from 600 g/mol to 2000 g/mol like 800 g/mol to 1600 g/mol in particular, 1000 g/mol to 1400 g/mol.

3. The lignin based composite material according to claim 1 or 2 wherein the degraded lignin is a lignin obtained by reductive hydrogenation of Kraft lignin.

4. The lignin based composite material according to any one of the preceding claims wherein the degraded lignin is obtained by reductive hydrogenation using a Ni-based catalyst, like a TiN-Ni based catalyst.

5. The lignin based composite material according to any one of the preceding claims wherein the plant or animal protein is selected from gluten, whey protein, casein, gelatin, albumin, soy, collagen, blood meal or a combination thereof.

6. The lignin based composite material according to any one of the preceding claims wherein the filler is selected from polymers including natural polymers, in particular, natural fibers, like polysaccharides, polyamides cellulose, lignocellulose or hemicellulose, starch, rubber, amber, chitosan, chitin, cotton, fiber glass or combinations thereof.

7. The lignin based composite material according to any one of the preceding claims wherein the cross-linker is selected from urea, amides, carboxylic acids, amino acids, ketones and aldehydes compounds or combinations thereof.

8. The lignin based composite material according to any one of the preceding claims wherein the ratio of protein to lignin is in the range of from 1:1 to 5:1, and/or the ratio of filler to lignin is in the range of from 1:1 to 7:1 and/or the ratio of filler to protein is in the range of from 1:0,7 to 7:1.

9. The lignin based composite material according to any one of the preceding claims wherein the protein is plant or animal protein, like gluten, the filler is a natural fiber of cellulose and the cross-linker is urea.

10. A method for producing a lignin based composite material or an article composed of a producing a lignin based composite material according to any one of claims 1 to 9 comprising the steps of
- providing degraded lignin whereby said lignin is obtained by reductive hydrogenation;
- mixing the degraded lignin with a protein, like plant or animal protein and a filler in the presence or absence of a solvent, like water to form a lignin based composite material; and
- optionally drying the obtained lignin based composite material to provide an article.

11. The method according to claim 10 wherein drying of the wet mixture of said lignin based composite material is carried out at a temperature in the range of 70 to 120°C to form the article.

12. The method according to any one of claims 10 to 11 wherein i) mixing is conducted by vigorously stirring the mixture in the presence of the aqueous solvent like water or ii) the mixture is extruded, for producing a foamed lignin based composite material.

13. The method according to any one of claims 10 to 12 for preparing a molded article comprising the further step of molding the mixture of the lignin based composite material before drying.

14. Molded article composed of the lignin based composite material according to any one of claims 1 to 9 or obtainable by a process according to any one of claims 10 to 13.

15. The use of the lignin based composite material according to any one of claims 1 to 9 for the preparation of adhesives, membranes, water retention materials, fire retardant materials, fire extinguisher materials, biomass derived materials, medium density fiber boards, particle boards, foams, insulators and packaging materials.

16. Wood based material composed of the lignin based composite material according to any one of claims 1 to 9 or obtainable or obtained by a process according to any one of claims 10 to 13, in particular, fiber boards and chip boards.
